# EUROPÄISCHE PATENTSCHRIFT

(11) **EP 3 757 694 B1**
(45) Veröffentlichungstag und Bekanntmachung des Hinweises auf die Patenterteilung: **26.10.2022**
(21) Anmeldenummer: 20172895.3
(22) Anmeldetag: 05.05.2020
(51) Int. Cl.: G05B 19/042

(54) **VERFAHREN UND STEUERGERÄT ZUM ÄNDERN EINES BETRIEBSMODUS EINES STEUERGERÄTS VON EINEM STANDARDMODUS IN EINEN ENTWICKLERMODUS**
METHOD AND CONTROLLER FOR CHANGING AN OPERATING MODE OF A CONTROL DEVICE FROM A STANDARD MODE TO A DEVELOPING MODE AND CONTROLLER
PROCÉDÉ ET CONTRÔLEUR DE CHANGEMENT D'UN MODE DE FONCTIONNEMENT D'UN APPAREIL DE COMMANDE D'UN MODE STANDARD EN MODE DÉVELOPPEUR ET SYSTÈME

(30) Priorität: 24.06.2019 DE 102019116888
(43) Veröffentlichungstag der Anmeldung: 30.12.2020
(73) Patentinhaber: Vaillant GmbH, 42859 Remscheid (DE)
(72) Erfinder: Maaß, Andre, 42369 Wuppertal (DE); Dreden, Tim Christopher von, 45257 Essen (DE); Grabe, Jochen, 51688 Wipperfürth (DE)
(74) Vertreter: Popp, Carsten

(56) Entgegenhaltungen:
- WO-A1-00/70415
- US-A- 5 270 948

## Beschreibung

Die Erfindung betrifft ein Verfahren zum Ändern eines Betriebsmodus eines Steuergeräts von einem Standardmodus in einen Entwicklermodus, ein Steuergerät zur Durchführung des Verfahrens sowie ein Heizgerät mit dem Steuergerät.

Steuergeräte für sicherheitsrelevante Anwendungen, wie beispielsweise für Heizgeräte werden in großer Stückzahl hergestellt und sind mit einer Betriebssoftware ausgestattet, an deren Betriebssicherheit vergleichsweise hohe Anforderungen gestellt werden. Daher werden diese Steuergeräte in der Regel einem aufwändigen Erprobungs- und Zulassungsprozess unterzogen.

Hierbei ist es jedoch nicht zulässig verschiedene Versionen des Steuergeräts für den späteren Einsatz beim Kunden und für die Erprobung und Zulassung bereitzustellen. Dies bezieht sich insbesondere auf Software, welche auf dem Steuergerät betrieben wird. Zudem müssen während der Erprobung und Zulassung (Entwickler-)Funktionen zur Verfügung stehen, die beim späteren Einsatz beim Kunden nicht mehr benötigt werden oder sogar vom Kunden nicht nutzbar sein sollen. Hierzu zählen z. B. Funktionen zum Verändern vorgegebener Limitierungen für die Betriebsparameter des Heizgeräts. Solche speziellen Funktionen sind für die Entwicklung erforderlich und dürfen zur Vermeidung von unerwünschten Nebeneffekten bei der Überführung einer Entwicklung in die Serie nicht entfernt werden. Gleichzeitig sollen solche Funktionen allerdings keinesfalls im Feld (oder im Extremfall sogar für Endkunden) verfügbar sein.

Dementsprechend werden bei solchen Steuergeräten üblicherweise verschiedene Betriebsmodi implementiert. Hierzu zählen in der Regel zumindest ein Standardmodus für den regulären Betrieb beim Kunden und ein Entwicklermodus für die fachmännische Einstellung, Erprobung und Zulassung des Steuergeräts. Ein Umschalten soll dabei jedoch üblicherweise nur von Fachpersonal durchführbar sein, sodass beispielweise fest im Gerät angebrachter Schalter regelmäßig als Option ausscheiden. In besonderen Varianten ist es auch erforderlich das bestimmte (in der Software enthaltene) Funktionen in Geräten im Feld zwar theoretisch mit implementiert sind, diese Funktionen allerdings überhaupt nicht freischaltbar sein dürfen.

Zum Umschalten in den Entwicklermodus, in dem die Entwicklerfunktionen freigeschaltet sind, hat sich bewährt ein bestimmtes Signal an einen Eingang des Steuergeräts anzulegen. Dabei ist vorgesehen, dass die Entwicklerfunktionen so lange freigeschaltet bleiben, wie das Signal anliegt. Mit anderen Worten ist es notwendig das Signal während des Entwicklermodus dauerhaft aufrecht zu erhalten.

Dies hat jedoch den Nachteil, dass der Eingang des Steuergerätes, an dem das Signal angelegt wird, während des Entwicklermodus nicht zur Verfügung steht. Damit belegt dieses Signal Ressourcen, die sonst für Funktionen verwendet werden könnten.

Ein gattungsgemäßes Verfahren mit den genannten Nachteilen ist aus der US 5 270 948 A bekannt. Zudem ist aus der WO 00/70415 A1 ein Verfahren zum automatischen Erkennen eines Betriebsmodus bekannt.

Es ist daher Aufgabe der Erfindung, ein Verfahren zum Ändern eines Betriebsmodus eines Steuergeräts von einem Standardmodus in einen Entwicklermodus bereitzustellen, welches ressourcenschonender betrieben werden kann. Zudem soll die Funktionalität des Steuergerätes während des Entwicklermodus erhöht werden.

Diese Aufgabe wird gemäß den Merkmalen des Anspruchs 1 gelöst.

Vorteilhafte Ausgestaltungen ergeben sich durch die Merkmale der abhängigen Ansprüche.

Das Verfahren erlaubt einen besonders vorteilhaften Entwicklerzugriff auf Steuergeräte. Dadurch, dass eine Freischaltinformation in einem nicht flüchtigen Speicher des Steuergerätes hinterlegt wird, kann der Eingang des Steuergerätes, an dem das Signal zur Freigabe des Entwicklerzugriffs angelegt wird, in vorteilhafter Weise während des Entwicklermodus wieder freigegeben werden, ohne dass der Entwicklermodus dadurch unterbrochen wird. Somit kann das Verfahren ressourcenschonender betrieben werden und die Funktionalität des Steuergerätes insbesondere durch die Verfügbarkeit eines weiteren freien Eingangs während des Entwicklermodus erhöht werden.

Gleichwohl erlaubt die Notwendigkeit des Anliegens des Hardwaresignals während des Aktivierens der Freischaltinformation, dass eine ungewollte oder unerlaubte Umschaltung in den Entwicklermodus weitestgehend vermieden werden kann. Dadurch, dass der Speicher nicht flüchtig ist kann in vorteilhafter Weise erreicht werden, dass die Freischaltinformation auch nach einer Unterbrechung der Stromversorgung noch vorhanden ist.

In Schritt a) erfolgt ein Erfassen eines an einem (bestimmten) Eingang des Steuergeräts anliegenden (bestimmten) Hardwaresignals, wobei das (bestimmte) Hardwaresignal und/oder der (bestimmte) Eingang für eine Freigabe zur Änderung des Betriebsmodus des Steuergeräts charakteristisch ist bzw. sind. Mit anderen Worten erkennt das Steuergerät das Hardwaresignal und zieht, aus dem Erkennen des Hardwaresignals (an einem bestimmten Eingang) den Rückschluss, dass der Betriebsmodus geändert werden darf.

In der Regel gibt es nur ein (bestimmtes) Hardwaresignal, welches eine Freigabe zur Änderung des Betriebsmodus des Steuergeräts charakteristisch ist. Bei dem Hardwaresignal kann es sich beispielsweise um ein analoges Signal, ein elektrisches Spannungssignal und/oder ein elektrisches Stromsignal handeln. Weiterhin gibt es in der Regel nur einen (bestimmten) Eingang, welcher für die Freigabe zur Änderung des Betriebsmodus des Steuergeräts charakteristisch ist. Bei dem Eingang handelt es sich in der Regel um einen (bestimmten) von mehreren (zum Beispiel drei) Eingängen des Steuergeräts.

In Schritt b) erfolgt ein Aktivieren einer Freischaltinformation, die für eine Freischaltung des Entwicklermodus charakteristisch ist. Die Freischaltinformation wird dabei in einem mit dem Steuergerät verbundenen, nicht-flüchtigen Speicher aktiviert. Insbesondere wird die Freischaltinformation dabei in einem nicht-flüchtigen Speicher des Steuergeräts aktiviert. Zudem erfolgt das Aktivieren während das Hardwaresignal an dem Eingang des Steuergeräts anliegt.

Dies bedeutet mit anderen Worten insbesondere, dass die Freischaltinformation nur aktiviert werden kann, wenn und während das Hardwaresignal (noch) an dem Eingang des Steuergeräts anliegt. Demgegenüber kann eine Deaktivierung der Freischaltinformation grundsätzlich auch dann erfolgen, wenn das Hardwaresignal nicht (mehr) an dem Eingang des Steuergeräts anliegt. Bei dem nicht-flüchtigen Speicher kann es sich beispielsweise um einen Flash-Speicher handeln.

In Schritt c) erfolgt ein Aufrechterhalten des Entwicklermodus, solange die Freischaltinformation in dem nicht flüchtigen Speicher aktiviert ist. Dies bedeutet mit anderen Worten insbesondere, dass die Freischaltinformation und der Entwicklermodus derart aneinander gekoppelt sind, dass sich das Steuergerät solange im Entwicklermodus befindet, wie die Freischaltinformation aktiv ist. Insbesondere ist vorgesehen, dass der Entwicklermodus (erst dann) beendet wird, wenn die Freischaltinformation in dem nicht flüchtigen Speicher deaktiviert wird.

In diesem Zusammenhang ist grundsätzlich (auch) eine automatische Deaktivierung nach Ablauf einer bestimmten Zeitdauer oder eine automatische Deaktivierung bei einem erneuten Erfassen des Hardwaresignals (bei bereits aktiviertem Entwicklermodus) denkbar. Bevorzugt ist jedoch vorgesehen, dass die Freischaltinformation manuell von einem (berechtigen) Benutzer (wie etwa einem Entwickler, Labormitarbeiter oder dergleichen) aktiviert und/oder deaktiviert werden kann bzw. muss.

Nach einer vorteilhaften Ausgestaltung wird vorgeschlagen, dass es sich bei dem Steuergerät um ein Steuergerät eines Heizgeräts handelt. Bei dem Heizgerät handelt es sich in der Regel um ein Gas- und/oder Ölheizgerät. Dies betrifft mit anderen Worten insbesondere ein Heizgerät, welches dazu eingerichtet ist, einen oder mehrere fossile Brennstoffe wie etwa Erdgas und/oder Erdöl, ggf. unter Zufuhr von Umgebungsluft aus einem Gebäude zu verbrennen, um Energie zur Erwärmung von beispielsweise Wasser zum Gebrauch in einer Wohnung zu erzeugen.

Beispielsweise kann es sich bei dem Heizgerät um ein sogenanntes Gas-Brennwertgerät handeln. Das Heizgerät weist in der Regel zumindest einen Brenner und eine Fördereinrichtung wie etwa ein Gebläse auf, die ein Gemisch von Brennstoff (Gas) und Verbrennungsluft (durch einen Gemischkanal des Heizgeräts) zum Brenner fördert. Anschließend kann das durch die Verbrennung entstehende Abgas durch ein (internes) Abgasrohr des Heizgeräts zu eines Abgasanlage (eines Hauses) geführt werden. An dieser Abgasanlage sind in der Regel mehrere Heizgeräte angeschlossen.

Nach einer weiteren vorteilhaften Ausgestaltung wird vorgeschlagen, dass in dem Entwicklermodus Funktionen freigegeben sind, die in dem Betriebsmodus nicht freigegeben sind. Beispiele für diese Entwicklerfunktionen sind unter anderem: ein Überschreiben interner Variablen (auch sicherheitsrelevanter), eine Änderung sicherheitsrelevanter Parameter, einen Programmablauf zur Messung der elektromagnetischen Verträglichkeit (EMV) starten, und/oder einen Conformance-Test für Bussysteme starten.

Nach einer weiteren vorteilhaften Ausgestaltung wird vorgeschlagen, dass das Hardwaresignal mit einem (bestimmten) Kodierwiderstand bereitgestellt wird. In der Regel wird das Hardwaresignal mit einem Kodierwiderstand mit einem definierten Wert bereitgestellt. Der Kodierwiderstand kann zum Bereitstellen des Hardwaresignals mit dem Eingang des Steuergeräts (physisch und/oder elektrisch leitend) verbunden werden. Beispielsweise kann der Kodierwiderstand Teil eines Steckers sein, der in den Eingang des Steuergeräts einsteckbar ist. Alternativ oder zusätzlich kann der Kodierwiderstand beispielsweise Teil eines Kabelbaums sein, der unter anderem mit dem Eingang des Steuergeräts verbindbar ist.

In diesem Zusammenhang ist es besonders vorteilhaft, wenn der Kodierwiderstand einen bestimmten elektrischen Widerstand hat. In diesem Zusammenhang kann der Kodierwiderstand, wenn er mit dem Eingang verbunden ist, ein bestimmtes Spannungssignal und/oder Stromsignal als Hardwaresignal an dem Eingang erzeugen.

Erfindungsgemäß wird vorgeschlagen, dass die Freischaltinformation in dem nicht flüchtigen Speicher aktiviert bleibt, auch wenn das Hardwaresignals an dem Eingang des Steuergeräts unterbrochen wird. Dies bedeutet mit anderen Worten insbesondere, dass ein Unterbrechen bzw. Entfernen des Hardwaresignals bei (zuvor) aktivierter Freischaltinformation nicht zu einer Deaktivierung der Freischaltinformation bzw. des Entwicklermodus führt. Insbesondere wird die Freischaltinformation nicht durch ein Unterbrechen bzw. Entfernen des Hardwaresignals geändert bzw. deaktiviert.

Nach einer weiteren vorteilhaften Ausgestaltung wird vorgeschlagen, dass zur Aktivierung der Freischaltinformation eine für die Freischaltung des Entwicklermodus charakteristische Variable in dem nicht-flüchtigen Speicher des Steuergeräts geändert (aktiviert) wird. In diesem Zusammenhang kann beispielsweise ein sogenanntes "Flag" von einem Benutzer gesetzt werden, welches die Freischaltinformation (und dadurch den Entwicklermodus) aktiviert.

Nach einer weiteren vorteilhaften Ausgestaltung wird vorgeschlagen, dass der Entwicklermodus durch ein Deaktivieren der Freischaltinformation in dem nicht-flüchtigen Speicher beendet wird. In diesem Zusammenhang kann beispielsweise ein gesetztes "Flag" von einem Benutzer wieder gelöscht werden, was dazu führt, dass die Freischaltinformation (und dadurch der Entwicklermodus) deaktiviert wird.

Zusammenfassend lässt sich eine besonders vorteilhafte Ausgestaltung des Verfahrens wie folgt beschreiben: Die Freischaltinformation für den Entwicklerzugriff wird im nicht flüchtigen Speicher abgelegt. Die Freischaltinformationen kann nur verändert werden, wenn das Hardwaresignal anliegt. Ist die Freischaltung erfolgt, kann das Hardwaresignal entfernt werden und der Eingang (Input) für andere Funktionen genutzt werden.

Nach einem weiteren Aspekt der Erfindung wird auch ein Steuergerät gemäß Anspruch 8 vorgeschlagen, welches zur Durchführung eines hier beschriebenen Verfahrens eingerichtet ist. Das Steuergerät kann insbesondere neben dem Eingang und/oder dem nicht flüchtigen Speicher auch einen Prozessor aufweisen, der auf den nicht flüchtigen Speicher zugreifen kann und Operationen zur Durchführung des Verfahrens ausführen kann. Bei dem Steuergerät handelt es sich vorzugsweise um ein Steuergerät für ein Heizgerät.

Nach einem weiteren Aspekt wird auch ein Heizgerät vorgeschlagen, welches ein hier beschriebenes Steuergerät aufweist.

Die im Zusammenhang mit dem Verfahren erörterten Details, Merkmale und vorteilhaften Ausgestaltungen können entsprechend auch bei dem hier vorgestellten Steuergerät und/oder dem Heizgerät auftreten und umgekehrt. Insoweit wird auf die dortigen Ausführungen zur näheren Charakterisierung der Merkmale vollumfänglich Bezug genommen.

Die Erfindung wird nun anhand der Figuren detailliert erläutert.

Es stellen dar:
- Figur 1:: schematisch einen beispielhaften Ablauf eines hier beschriebenen Verfahrens, und
- Figur 2:: schematisch einen beispielhaften Aufbau eines hier beschriebenen Heizgeräts.

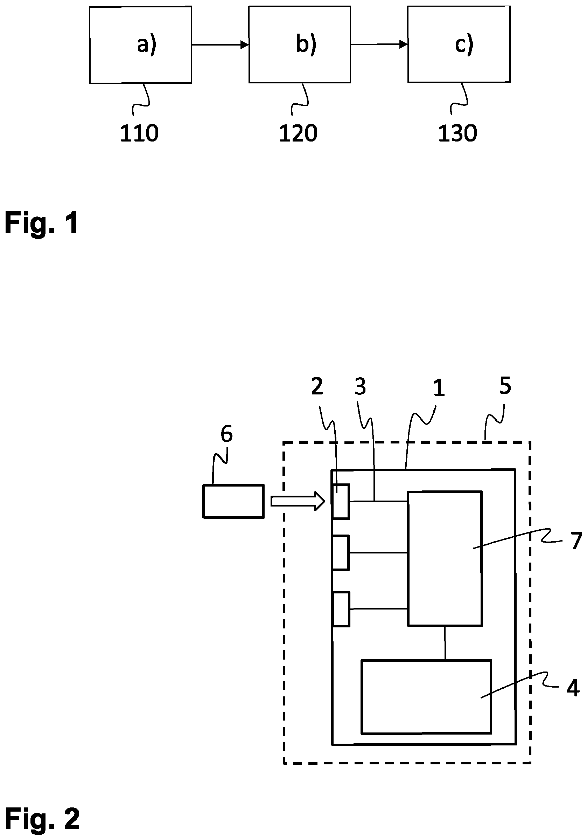

Figur 1 zeigt schematisch einen beispielhaften Ablauf eines hier beschriebenen Verfahrens. Das Verfahren dient zum Ändern eines Betriebsmodus eines Steuergeräts 1 von einem Standardmodus in einen Entwicklermodus. Die mit den Blöcken 110, 120 und 130 gezeigte Reihenfolge der Schritte a), b) und c) stellt sich in der Regel bei einem üblichen Ablauf des Verfahrens ein.

In Block 110 erfolgt gemäß Schritt a) ein Erfassen eines an einem Eingang 2 des Steuergeräts 1 anliegenden Hardwaresignals 3, wobei zumindest das Hardwaresignal 3 oder der Eingang 2 für eine Freigabe zur Änderung des Betriebsmodus des Steuergeräts 1 charakteristisch ist.

In Block 120 erfolgt gemäß Schritt b) ein Aktivieren einer Freischaltinformation, die für eine Freischaltung des Entwicklermodus charakteristisch ist, in einem mit dem Steuergerät 1 verbundenen, nicht-flüchtigen Speicher 4, während das Hardwaresignal 3 an dem Eingang 2 des Steuergeräts 1 anliegt.

In Block 130 erfolgt gemäß Schritt c) ein Aufrechterhalten des Entwicklermodus, solange die Freischaltinformation in dem nicht flüchtigen Speicher 4 aktiviert ist.

Figur 2 zeigt schematisch einen beispielhaften Aufbau eines hier beschriebenen Heizgeräts 5. Das Heizgerät 5 weist ein Steuergerät 1 auf, welches zur Durchführung eines hier beschriebenen Verfahrens eingerichtet ist.

Bei dem Steuergerät 1 handelt es sich hier somit beispielhaft um ein Steuergerät 1 eines Heizgeräts 5. Weiterhin sind in dem Entwicklermodus beispielsweise Funktionen freigegeben sind, die in dem Betriebsmodus nicht freigegeben sind.

Das Steuergerät 1 weist hier beispielhaft zusätzlich zu dem Eingang 2 und dem nicht flüchtigen Speicher 4 auch einen Prozessor 7 auf, der auf den nicht flüchtigen Speicher 4 zugreifen kann und Operationen zur Durchführung des Verfahrens ausführen kann.

Ferner ist in Figur 2 veranschaulicht, dass das Hardwaresignal 3 zum Beispiel mit einem Kodierwiderstand 6 bereitgestellt werden kann. Der Kodierwiderstand 6 ist hier beispielhaft einem Stecker integriert.

Zudem hat der Kodierwiderstand 6 beispielsweise einen bestimmten elektrischen Widerstand. Wenn der Kodierwiderstand 6 mit dem Eingang 2 verbunden ist, zum Beispiel durch ein Einstecken des Steckers, liegt das Hardwaresignal 3 an dem Eingang 2 an.

Hier ist weiterhin vorgesehen, dass die Freischaltinformation in dem nicht flüchtigen Speicher 4 aktiviert bleibt, auch wenn das Hardwaresignals 3 an dem Eingang 2 des Steuergeräts 1 unterbrochen wird. Diese Unterbrechung kann beispielsweise durch ein Abziehen des Steckers mit dem Kodierwiderstand 6 erfolgen.

Weiterhin ist hier beispielhaft vorgesehen, dass zur Aktivierung der Freischaltinformation eine für die Freischaltung des Entwicklermodus charakteristische Variable in dem nicht-flüchtigen Speicher 4 des Steuergeräts 1 geändert wird. Beispielhaft kann ein entsprechendes "Flag" gesetzt werden. Zudem kann der Entwicklermodus hier durch ein Deaktivieren der Freischaltinformation in dem nicht-flüchtigen Speicher 4 beendet werden.

Insbesondere muss der Kodierwiderstand 6 nur zum Einschalten des Entwicklermodus anliegen. Wenn der Kodierwiderstand 6 anliegt kann eine Variable im nicht flüchtigen Speicher 4 umgeschrieben werden, die den Entwicklermodus dauerhaft (d.h. auch ohne Kodierwiderstand 6) freischaltet. So kann der Hardwareeingang 2 des Kodierwiderstands 6 auch im Entwicklermodus für weitere Funktionen genutzt werden. Wird der Entwicklermodus ohne Kodierwiderstand 6 über die Variable abgeschaltet, so ist er in der Regel dauerhaft deaktiviert und kann insbesondere nur mittelts Kodierwiderstand 6 reaktiviert werden.

### Bezugszeichenliste

- 1: Steuergerät
- 2: Eingang
- 3: Hardwaresignal
- 4: Speicher
- 5: Heizgerät
- 6: Kodierwiderstand
- 7: Prozessor

## Patentansprüche

1. Verfahren zum Ändern eines Betriebsmodus eines Steuergeräts (1) von einem Standardmodus in einen Entwicklermodus, umfassend zumindest folgende Schritte:
a) Erfassen eines an einem Eingang (2) des Steuergeräts (1) anliegenden Hardwaresignals (3), wobei das Hardwaresignal (3) für eine Freigabe zur Änderung des Betriebsmodus des Steuergeräts (1) charakteristisch ist,
b) Aktivieren einer Freischaltinformation, die für eine Freischaltung des Entwicklermodus charakteristisch ist, in einem mit dem Steuergerät (1) verbundenen, nicht-flüchtigen Speicher (4), während das Hardwaresignal (3) an dem Eingang des Steuergeräts (1) anliegt,
c) Aufrechterhalten des Entwicklermodus, solange die Freischaltinformation in dem nicht flüchtigen Speicher (4) aktiviert ist;
**dadurch gekennzeichnet, dass** die Freischaltinformation in dem nicht flüchtigen Speicher (4) aktiviert bleibt, auch wenn das Hardwaresignals (3) an dem Eingang (2) des Steuergeräts (1) unterbrochen wird.

2. Verfahren nach Anspruch 1, wobei es sich bei dem Steuergerät (1) um ein Steuergerät eines Heizgeräts (5) handelt.

3. Verfahren nach Anspruch 1 oder 2, wobei in dem Entwicklermodus Funktionen freigegeben sind, die in dem Betriebsmodus nicht freigegeben sind.

4. Verfahren nach einem der vorhergehenden Ansprüche, wobei das Hardwaresignal (3) mit einem Kodierwiderstand (6) bereitgestellt wird.

5. Verfahren nach Anspruch 4, wobei der Kodierwiderstand (6) einen bestimmten elektrischen Widerstand hat.

6. Verfahren nach einem der vorhergehenden Ansprüche, wobei zur Aktivierung der Freischaltinformation eine für die Freischaltung des Entwicklermodus charakteristische Variable in dem nicht-flüchtigen Speicher (4) des Steuergeräts (1) geändert wird.

7. Verfahren nach einem der vorhergehenden Ansprüche, wobei der Entwicklermodus durch ein Deaktivieren der Freischaltinformation in dem nicht-flüchtigen Speicher (4) beendet wird.

8. Steuergerät (1), eingerichtet zur Durchführung eines Verfahrens nach einem der vorhergehenden Ansprüche.

9. Heizgerät (5), aufweisend ein Steuergerät (1) nach Anspruch 8.

## Claims

1. Method for changing an operating mode of a control device (1) from a standard mode to a developer mode, comprising at least the following steps:
a) detecting a hardware signal (3) present at an input (2) of the control device (1), wherein the hardware signal (3) is characteristic of a release for changing the operating mode of the control device (1),
b) activating an enable message which is characteristic of enabling of the developer mode, in a non-volatile memory (4) connected to the control device (1), while the hardware signal (3) is present at the input of the control device (1),
c) maintaining the developer mode as long as the enable message is activated in the non-volatile memory (4);
**characterised in that** the enable message in the non-volatile memory (4) remains activated even if the hardware signal (3) at the input (2) of the control device (1) is interrupted.

2. Method according to claim 1, wherein the control device (1) is a control device of a heater (5).

3. Method according to claim 1 or 2, wherein functions are released in the developer mode that are not released in the operating mode.

4. Method according to any of the preceding claims, wherein the hardware signal (3) is provided with a coding resistor (6).

5. Method according to claim 4, wherein the coding resistor (6) has a certain electrical resistance.

6. Method according to any of the preceding claims, wherein, in order to activate the enable message, a variable which is characteristic of the enabling of the developer mode is changed in the non-volatile memory (4) of the control device (1).

7. Method according to any of the preceding claims, wherein the developer mode is terminated by deactivating the enable message in the non-volatile memory (4).

8. Control device (1) configured to perform a method according to any of the preceding claims.

9. Heater (5) having a control device (1) according to claim 8.

## Revendications

1. Procédé pour changer un mode de fonctionnement d'un dispositif de commande (1) d'un mode standard à un mode de développement, comprenant au moins les étapes suivantes :
a) détection d'un signal matériel (3) appliqué à une entrée (2) du dispositif de commande (1), dans lequel le signal matériel (3) est caractéristique d'un déblocage pour la modification du mode de fonctionnement du dispositif de commande (1),
b) activation d'une information de déverrouillage qui est caractéristique d'un déverrouillage du mode de développement, dans une mémoire non volatile (4) reliée au dispositif de commande (1), pendant que le signal matériel (3) est appliqué à l'entrée du dispositif de commande (1),
c) maintien du mode de développement tant que l'information de déverrouillage est activée dans la mémoire non volatile (4) ;
**caractérisé en ce que** l'information de déverrouillage reste activée dans la mémoire non volatile (4), même si le signal matériel (3) est interrompu à l'entrée (2) du dispositif de commande (1).

2. Procédé selon la revendication 1, dans lequel le dispositif de commande (1) est un dispositif de commande d'un dispositif de chauffage (5).

3. Procédé selon la revendication 1 ou 2, dans lequel des fonctions qui ne sont pas débloquées dans le mode de fonctionnement sont débloquées dans le mode de développement.

4. Procédé selon l'une quelconque des revendications précédentes, dans lequel le signal matériel (3) est fourni avec une résistance de codage (6).

5. Procédé selon la revendication 4, dans lequel la résistance de codage (6) présente une résistance électrique déterminée.

6. Procédé selon l'une quelconque des revendications précédentes, dans lequel, pour activer l'information de déverrouillage, une variable caractéristique du déverrouillage du mode de développement est modifiée dans la mémoire non volatile (4) du dispositif de commande (1).

7. Procédé selon l'une quelconque des revendications précédentes, dans lequel le mode de développement est arrêté par une désactivation de l'information de déverrouillage dans la mémoire non volatile (4).

8. Dispositif de commande (1), conçu pour mettre en œuvre un procédé selon l'une quelconque des revendications précédentes.

9. Dispositif de chauffage (5), présentant un dispositif de commande (1) selon la revendication 8.
